# EUROPÄISCHE PATENTSCHRIFT

(11) **EP 2 276 653 B1**
(45) Veröffentlichungstag und Bekanntmachung des Hinweises auf die Patenterteilung: **16.09.2015**
(21) Anmeldenummer: 09742077.2
(22) Anmeldetag: 06.05.2009
(51) Int. Cl.: B60S 1/34

(54) **SCHEIBENWISCHERVORRICHTUNG**
WINDOW WIPER DEVICE
DISPOSITIF ESSUIE-GLACE

(30) Priorität: 09.05.2008 DE 102008001683
(43) Veröffentlichungstag der Anmeldung: 26.01.2011
(73) Patentinhaber: Robert Bosch GmbH, 70442 Stuttgart (DE)
(72) Erfinder: BENNER, Andreas, 77830 Buehlertal (DE); ZIMMER, Joachim, 77880 Sasbach (DE); KALCHSCHMIDT, Peter, 76646 Bruchsal Untergromb. (DE); BOOS, Tino, 76532 Baden-Baden (DE); HELLER, Joachim, 77815 Buehl (DE); KRAUS, Achim, 77815 Buehl (DE)
(86) Internationale Anmeldenummer: PCT/EP2009/055445
(87) Internationale Veröffentlichungsnummer: WO 2009/135859

(56) Entgegenhaltungen:
- DE-A1- 4 428 371
- DE-C- 843 371
- FR-A1- 2 487 755
- GB-A- 497 027

## Beschreibung

Die Erfindung betrifft eine Scheibenwischervorrichtung insbesondere für einen Heckscheibenwischer eines Kraftfahrzeuges mit einem Wischermotor, welcher eine oder mehrere Abtriebswellen aufweist, und mit einem oder mehreren Wischerarmen, die jeweils über einen Befestigungsmechanismus an einem Endabschnitt der Abtriebswelle befestigbar ist.

### Stand der Technik

Scheibenwischervorrichtung der oben genannten Art sind allgemein bekannt und beispielsweise in der DE 10 2006 007 350 A1 beschrieben. Aus diesem Dokument ist ein Scheibenwischer für Kraftfahrzeuge bekannt, die an kegelstumpfförmigen Endabschnitten von Abtriebswellen angebracht sind. Auf dem kegelstumpfförmigen Endabschnitt, der in eine Schraube übergeht, ist eine Rändelung ausgebildet. Die Rändelung des kegelstumpfförmigen Endabschnitts greift in eine kegelstumpfförmige Nabe an einem Ende eines Wischerarms des Scheibenwischers ein. Die Rändelung hat die Aufgabe, eine Verdrehung des Scheibenwischers relativ zu der Abtriebswelle zu verhindern.

Zur Befestigung des Scheibenwischers an der Abtriebswelle ist an deren aus der Nabe hervorstehenden Ende ein Außengewinde ausgebildet, auf die eine Mutter aufschraubbar ist, so dass sich aufgrund der dabei eingreifenden Rändelungen der Wischerarm nicht mehr relativ zur Abtriebswelle verdrehen kann, da die Nabe des Wischerarmes durch das Anziehen der Mutter in die Rändelung der Abtriebswelle gepresst wird.

Nachteilig an diesem Aufbau ist zum Einen, dass zur Befestigung des Scheibenwischers bei der Endmontage Zusatzteile wie Muttern, Unterlegscheiben und dergleichen durch den Kunden vorgehalten werden müssen. Eine solcher Befestigung erfordert einen hohen zeitlichen Aufwand. Bei der Endmontage können Varianzen in der Verbindung entstehen, da jeder Kunde seine eigenen Bauteile und Werkzeuge einsetzt und so auch beispielsweise unterschiedlich große Anzugsmomente während der Montage in die Rändelverbindung eingebracht werden.

Mit der Rändelgeometrie gehen ferner Probleme sowohl bei der Herstellung als auch bei der Kraftübertragung einher. Zum Einen ist die Rändelgeometrie nicht reproduzierbar herstellbar, da durch die zur Einbringung der Rändelung einhergehende Werkstoffbearbeitung unterschiedliche Werkstoffeigenschaften entlang des Bauteils erzeugt werden. Ein weiteres Problem mit einer solchen Rändelung besteht darin, dass über den Rändelkegel sehr hohe Kräfte übertragen werden können, was dazu führen kann, dass bei einer Überschreitung eines zu übertragenden Moments die damit einhergehenden hohen Kräfte in das Wischersystem eingeleitet werden und darin ggf. irreparable Schäden verursachen können.

Das Dokument GB 4 970 27 offenbart einen Befestigungsmechanismus zur Befestigung eines Wischerarms auf einer Abtriebswelle, der ein Gewindestück aufweist, in welchem eine komplementär zu einem Endabschnitt der Abtriebswelle ausgebildete Bohrung vorgesehen ist. Zur Befestigung des Wischerarms auf der Abtriebswelle wird das Verbindungsstück auf den Endabschnitt der Abtriebswelle aufgeschoben und anschließend eine Nuss auf einen am Endabschnitt der Abtriebswelle ausgebildeten Außengewinde aufgeschraubt, um über eine Hülse das Verbindungsstück zusammenzupressen. Um ein Durchrutschen zwischen dem Verbindungsstück und der Hülse zu verhindern, ist in diesem Dokument vorgesehen, einen Vorsprung an der Hülse auszubilden, der in den in dem Verbindungsstück ausgebildeten Schlitz eingreift und somit eine Relativbewegung zwischen Hülse und Verbindungsstück verhindert. Der Endabschnitt der Abtriebswelle gemäß diesem Dokument ist jedoch dabei sehr aufwendig. Zum einen ist es notwendig, das Verbindungsstück zur Einstellung einer Presspassung geschlitzt auszuführen. Zum anderen ist es durch den hier gezeigten Aufbau nicht möglich, ein minimales sowie maximales zu übertragenes Moment zur Einstellung eines optimalen Wischfelds einzustellen, welcher eine Beschädigung des Systems durch auf den Wischerarm aufgebrachte äußere Kräfte vermeidet.

Es besteht somit ein Interesse, sowohl ein minimales Moment für das Wischfeld einstellen zu können als auch ein maximales Moment, um ein Überschreiten der Wischwinkelgrenze, einen sogenannten missuse, auffangen zu können, indem auch das maximal zu übertragene Moment durch das System begrenzt ist. Ein solcher missuse kann beispielsweise auftreten, wenn eine große Kraft auf den Wischerarm einwirkt, wie es z.B. der Fall ist, wenn sich der Wischarm in einer Waschanlage an einer der Waschbürsten verhakt und die Waschbürste an dem Wischerarm zieht, so dass das Gestänge über den gesamten Wischwinkel hinaus herausgedreht wird, oder wenn große Schneemassen vom Dach des Kraftfahrzeuges über die Front- oder Heckscheibe auf den Wischerarm rutschen.

Somit ist es Aufgabe der vorliegenden Erfindung zum Einen, eine Scheibenwischervorrichtung bereitzustellen, die bei möglichst geringer Teilevielfalt einfach herstellbar und montierbar ist.

Zum anderen ist es Aufgabe der vorliegenden Erfindung, eine Vorrichtung bereitzustellen, welche die Einstellung eines minimalen sowie maximalen Momentes zur Erreichung eines optimalen Wischfeldes bereitzustellen, die eine Beschädigung des Systems durch auf den Wischerarm aufgebrachte äußere Kräfte vermeidet.

### Offenbarung der Erfindung

Diese Aufgabe wird erfindungsgemäß durch die Merkmale des Anspruchs 1 gelöst.

Mit anderen Worten wird durch Vorsehen des Befestigungsmechanismus mit der komplementär zur Abtriebswelle ausgebildeten Aussparung möglich, die Geometrie des Endabschnitts der Abtriebswelle zu vereinfachen, die Nachbearbeitung der Abtriebswelle weitestgehend zu vermeiden und die Montage der Scheibenwischervorrichtung wesentlich zu vermeiden und die Montage der Scheibenwischervorrichtung wesentlich zu vereinfachen. Sowohl die Herstellung eines bei einer Rändelkegelverbindung notwendigen Außengewindes als auch der Rändelkegel selbst entfallen vollständig. Statt dessen ist zur Herstellung der Abtriebswelle nunmehr nur noch ein Ablängen der Abtriebswelle notwendig, eine Nachbearbeitung des äußeren Zylinders der Abtriebswelle entfällt.

Ferner ist das maximal übertragbare Moment durch den Reibwert, der sich durch die reibschlüssige Verbindung zwischen Abtriebswelle und Verbindungsstück bzw. zwischen Wischerarm und Verbindungsstück einstellt, begrenzt, so dass bei Überschreiten eines Maximalwertes das Verbindungsstück auf der Abtriebswelle oder aber auch der Wischerarm auf dem Verbindungsstück durchrutscht, je nach dem an welcher Stelle das niedrigere Reibmoment zwischen den Verbindungspartnern vorliegt und damit das geringere Reibmoment übertragbar ist. Durch die Begrenzung des maximal übertragbaren Moments wird somit verhindert, dass zu große Kräfte in das System eingeleitet werden, was sonst eine Beschädigung des Systems zur Folge haben könnte.

Zur Vereinfachung der Montage kann in einem Ausführungsbeispiel vorgesehen sein, dass sich die reibschlüssige Verbindung zwischen Verbindungsstück und Abtriebswelle durch die Montage des Wischerarms an dem Befestigungsmechanismus einstellt. Dies kann beispielsweise dadurch erreicht werden, dass die Aussparung in dem Verbindungsstück und der Durchmesser des Endabschnitts der Abtriebswelle so ausgelegt sind, dass sich eine enge Passung einstellt, wobei das vermeintliche Restspiel dadurch im montierten Zustand überwunden wird, dass das Verbindungsstück beim Aufschieben des Wischerarms im Bereich der Aussparung um wenige Mikrometer zusammengedrückt wird. Alternativ ist es natürlich auch möglich, diese Kompression durch Aufschieben eines separaten Ringes auf das Verbindungsstück mit entsprechender Festigkeit und geometrischer Auslegung hervorzurufen.

In einer bevorzugten Ausführungsform ist die reibschlüssige Verbindung zwischen Wischerarm und Verbindungsstück durch zwei komplementär ausgeführte Kegelflächen gebildet, welche im montierten Zustand eine reibschlüssige Verbindung bilden. Dies ermöglicht eine besonders einfache Montage des Wischerarms an dem Verbindungsstück sowie eine homogene Kompression des Verbindungsstücks im Einsteckbereich der Abtriebswelle zur Einstellung der reibschlüssigen Verbindung.

In einem weiteren Ausführungsbeispiel der vorliegenden Erfindung ist an dem Verbindungsstück eine Anlauffläche vorgesehen, über welche der Weg des Wischerarms auf dem Verbindungsstück axial begrenzbar ist. So kann verhindert werden, dass der Wischerarm zu weit auf das Befestigungsstück aufgeschoben wird oder gar von Letzterem herunter geschoben wird. Durch Begrenzung des axialen Weges des Wischerarms in Richtung der Abtriebswelle kann ferner eine Begrenzung der auf das Verbindungsstück wirkenden Querkraft und damit der Kompression des Verbindungsstücks erreicht werden, wodurch die zwischen Verbindungsstück und Wischerarm einstellende Normalkraft und damit das Reibmoment begrenzbar wird. Die Anlauffläche kann zur Einstellung verschiedener zu übertragener Momente unabhängig von den auf den Wischerarm wirkenden Kräfte verstellbar ausgeführt sein.

Erfindungsgemäss ist es vorgesehen, dass zwischen dem Verbindungsstück und der Abtriebswelle oder zwischen dem Verbindungsstück und dem Wischerarm und dem Verbindungsstück und der Abtriebswelle
ein reibwertsteigerndes Mittel vorgesehen sein. Dieses reibwertsteigernde Mittel kann sowohl auf der Abtriebswelle oder aber auch an der Aussparung des Verbindungsstücks insbesondere im Berührungsbereich zwischen Aussparung und Abtriebswelle, durch einen aufzutragenden reibwertsteigernden Lack beispielsweise durch Aufsprühen aufgebracht sein.

Natürlich ist es auch möglich, das reibwertsteigernde Mittel zwischen Wischerarm und Verbindungsstück in deren gemeinsamen Berührungsbereich vorzusehen und auf gleiche Weise auf diesen Bereich aufzubringen.

Alternativ kann der Reibwert und damit das daraus resultierende Reibmoment auch durch Veränderung der Oberfläche in der Abtriebswelle und/oder der Aussparung innerhalb des Verbindungsstücks und des Berührungsbereichs zwischen Verbindungsstück und Wischerarm gebildet sein. Dies kann beispielsweise durch Flächenbearbeitung wie Aufrauhen oder durch ein Strahlverfahren wie zum Beispiel Sandstrahlen bewirkt werden. Natürlich sind auch Kombinationen aus reibwertsteigernden Schichten und einer Oberflächenbearbeitung denkbar.

In einem weiteren Ausführungsbeispiel ist das reibwertsteigernde Mittel durch eine zwischen Verbindungsstück und Abtriebswelle oder zwischen Verbindungsstück und Wischerarm und Verbindungsstück und Abtriebswelle eingesetzten Reibhülse oder einen Reibkegel gebildet. Wird diese Variante gewählt, so ist es relativ einfach, für verschiedene Kraftfahrzeuge mit beispielsweise unterschiedlichen Höchstgeschwindigkeiten gleiche Teile einzusetzen und nur durch Austausch der Reibhülse verschiedene Maximalgrenzen des über den Befestigungsmechanismus maximal zu übertragenden Moments einzustellen.

Ferner ist es möglich, die Reibwerte zwischen Verbindungsstück und Wischerarm und zwischen Verbindungsstück und Abtriebswelle unterschiedlich zu wählen. Dies eröffnet die Möglichkeit, den Ort des Durchrutschens bei Überschreitung des maximal zu übertragenden Momentes festzulegen, indem der Reibwert an dem entsprechenden Verbindungsbereich kleiner gewählt wird. Ist beispielsweise ein Durchrutschen an dem Berührungsbereich zwischen Wischerarm und Verbindungsstück gewünscht, so wird dort ein Reibmoment eingestellt, welches niedriger ist, als das Reibmoment zwischen Verbindungsstück und Abtriebswelle. Umgekehrt wird das Reibmoment zwischen Wischerarm und Verbindungsstück höher gewählt als zwischen Verbindungsstück und Abtriebswelle, wenn ein Durchrutschen im Berührungsbereich zwischen Abtriebswelle und Verbindungsstück gewünscht ist. Das Einstellen des Reibwertes kann ebenfalls entweder durch Flächenbearbeitung, durch Aufbringung von reibwertsteigernden Materialien oder durch Einsetzen verschiedener Reibhülsen oder aber auch Kombinationen daraus erreicht werden.

In einem weiteren Ausführungsbeispiel der vorliegenden Erfindung ist zur Verhinderung eines Durchrutschens des Wischerarms auf dem Verbindungsstück mindestens ein einen Formschluss bildendes Kopplungselement an dem Verbindungsstück und dem Wischerarm vorgesehen. Dadurch wird erreicht, dass bei der Erhaltung des einfachen Aufbaus und der einfachen Montage des Wischerarms an der Abtriebswelle der Ort des Durchrutschens durch entsprechende Ausbildung einer formschlüssigen Verbindung am Verbindungsstück bzw. dem Wischerarm bzw. dem Endabschnitt der Abtriebswelle vorher festlegbar ist.

Wird ein Durchrutschen des Wischerarms auf dem Verbindungsstück bevorzugt, so wird gemäss einer nicht beanspruchten Ausführung das formschlussbildende Kopplungselement an dem Berührungsbereich zwischen Verbindungsstück und Endabschnitt der Abtriebswelle vorgesehen. Andererseits für den Fall, dass ein Durchrutschen zwischen Verbindungsstück und Abtriebswelle gewünscht ist, kann das formschlussbildende Kopplungselement zwischen Wischerarm und Verbindungsstück vorgesehen werden. Wenn hingegen ein Durchrutschen gar nicht gewünscht ist, beispielsweise in dem Fall, in dem auch ein Überschreiten eines bestimmten maximal zu übertragenden Moments beispielsweise zugunsten einer extrem verschleißarmen Verbindung in Kauf genommen werden soll, können auch an beiden Berührungsbereichen formschlussbildende Kopplungselemente vorgesehen sein. Die Kopplungselemente können auf einfache Weise dadurch gebildet werden, dass eine von der sonst vorliegenden kreisrunden Form von Verbindungsstück bzw. Endabschnitt der Abtriebswelle oder Wischerarm abweichende Formgebung gewählt wird, oder indem Sperrelemente wie beispielsweise Zylinderstifte, Kegelstifte, Madenschrauben oder Keile in den Berührungsbereich zwischen Verbindungsstück und Wischerarm bzw. Abtriebswelle eingesetzt werden.

Eine besonders einfache Form der Befestigung des Verbindungsstücks an der Abtriebswelle wird in einem weiteren Ausführungsbeispiel der vorliegenden Erfindung dadurch erreicht, dass in der Abtriebswelle eine Bohrung ausgebildet ist, in welche ein Befestigungsmittel einsetzbar ist. Das Befestigungsmittel kann beispielsweise eine Schraube, ein Bolzen oder ein Niet sein, welches zur Befestigung bei der Montage zunächst durch eine Aussparung in dem Verbindungsstück geführt wird und anschließend in die Bohrung in der Abtriebswelle eingesetzt wird. Andere im Stand der Technik bekannte Befestigungsmittel sind natürlich ebenfalls denkbar.

Um die reibschlüssige Verbindung zwischen Wischerarm und Verbindungsstück und damit das zwischen Wischerarm und Verbindungsstück zu übertragende Moment einstellen zu können, ist in einem Ausführungsbeispiel der vorliegenden Erfindung eine Druckscheibe an dem Verbindungsstück vorgesehen, über welche durch Einsetzen und/oder Festziehen des Befestigungsmittels eine Kraft auf den Wischerarm aufbringbar. Durch Bewegung des Befestigungsmittels in Richtung der Abtriebswelle wird über die Druckscheibe der Wischerarm auf dem Verbindungsstück ebenfalls in Richtung der Abtriebswelle fortbewegt, wodurch die zwischen Wischerarm und Verbindungsstück wirkende Normalkraft immer weiter gesteigert wird. Durch diese Normalkraft wird ein eventuell vorhandenes Restspiel zwischen dem Endabschnitt der Abtriebswelle und der Aussparung durch Verformung des Bauteils überwunden und es stellt sich somit auch eine reibschlüssige Verbindung zwischen Verbindungsstück und Endabschnitt der Abtriebswelle ein, die bei weiterer Fortbewegung des Wischerarms auf dem Verbindungsstück ebenfalls vergrößert wird.

Hinsichtlich weiterer vorteilhafter Ausführungsform der vorliegenden Erfindung wird auf die Unteransprüche sowie die nachfolgende Beschreibung eines Ausführungsbeispiels anhand der beiliegenden Zeichnungen verwiesen.

### Ausführungsbeispiel

Es zeigt:
- Figur 1: einen Längsschnitt durch einen Befestigungsmechanismus zur Befestigung eines Wischerarms an eine Abtriebswelle eines Wischermotors einer Scheibenwischervorrichtung mit einer Durchrutschsicherung an der Abtriebswelle;
- Figur 2: einen Längsschnitt durch einen alternativen Befestigungsmechanismus mit einer weiteren Durchrutschsicherung an der Abtriebswelle, und
- Figur 3: den Befestigungsmechanismus gemäß Figur 2 mit einer Durchrutschsicherung am Wischerarm.

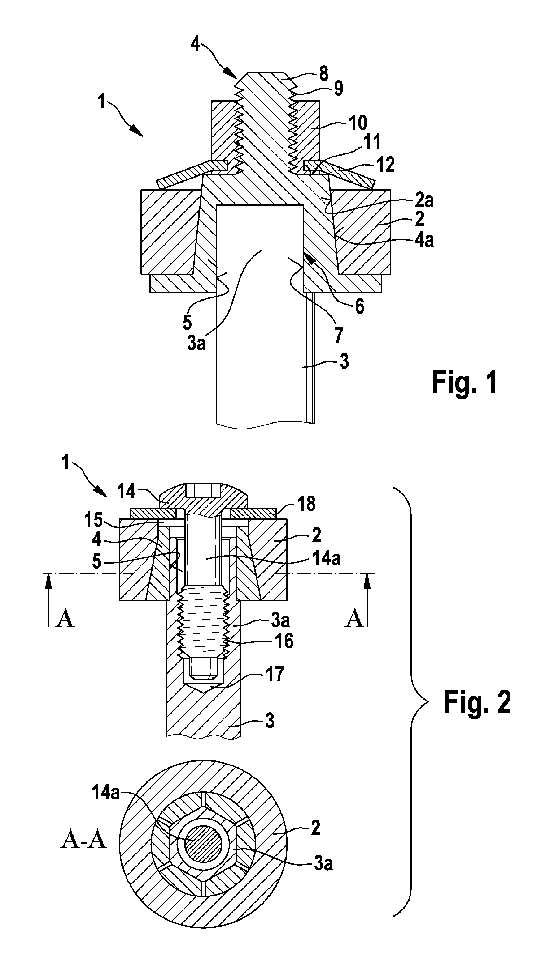

Die Figur 1 zeigt einen Befestigungsmechanismus 1 zur Befestigung eines Wischerarms 2 an einem Endabschnitt einer Abtriebswelle 3 eines nicht weiter im Detail dargestellten Wischermotors einer Scheibenwischervorrichtung.

Der Befestigungsmechanismus 1 weist ein Verbindungsstück 4 auf, in welchem ein komplementär zum Endabschnitt 3 der Abtriebswelle 3 ausgebildeter Einsteckbereich in Form einer Aussparung 5 vorgesehen ist, in die der Endabschnitt 3a eingesetzt ist.

Bei der Aussparung 5 ist eine von der kreisrunden Form abweichende Formgebung in der Form eines Steges 6 als Kopplungselement vorgesehen, welcher komplementär zu einer am Endabschnitt 3a der Abtriebswelle 3 ausgebildeten Abflachung 7 ausgebildet ist. Diese Abflachung 7 ist auf sehr einfache Weise in den Endabschnitt 3a der Abtriebswelle 3 gefräst worden. Aufgrund des Steges 6 in Kombination mit der Abflachung 7 wird verhindert, dass das Verbindungsstück 4 auf der Abtriebswelle 3 durchrutschen kann. Erst bei Aufbringung eines Momentes, welches zum Abschälen des Werkstoffes des Steges und somit zu einer Beschädigung des Bauteils führt, ist eine Drehbewegung der Abtriebswelle 3 innerhalb des Verbindungsstücks 4 möglich.

Oberhalb dieses Einsteckbereichs ist der Wischerarm 2 an dem Verbindungsstück 4 montiert. Dazu ist das Verbindungsstück 4 im Berührungsbereich mit dem Wischerarm 2 mit einer Keilfläche 4a versehen, die komplementär zu der dem Berührungsbereich zugewandten Fläche 2a des Wischerarms 2 ausgebildet ist, so dass sich im montierten Zustand zwischen Wischerarm 2 und Verbindungsstück 4 eine reibschlüssige Verbindung ausbildet.

An der der Abtriebswelle 3 gegenüberliegenden Seite weist das Verbindungsstück 4 einen Vorsprung 8 auf, an dem ein Außengewinde 9 ausgebildet ist, auf das eine Befestigungsmutter 10 aufgeschraubt ist, über welche der Wischerarm 2 in axialer Richtung durch Aufbringen eines Anzugsmoments entlang des Verbindungsstücks 4 in axialer Richtung bewegt und in die gewünschte Position gebracht und in dieser Position fixiert werden kann.

Um den axialen Weg der Befestigungsmutter 10 zu begrenzen und so die auf den Wischerarm 2 wirkenden Kräfte vom Anzugsmoment der Befestigungsmutter 10 zu entkoppeln, und eine reproduzierbare Positionierung des Wischerarms 2 auf dem Verbindungsstück 4 zu ermöglichen, ist in diesem Ausführungsbeispiel ein Anschlag 11 an dem Verbindungsstück 4 vorgesehen. Durch die Beschränkung des axialen Wegs der Befestigungsmutter 10 auf dem Verbindungsstück 4 kann das von außen auf die Befestigungsmutter 10 wirkende Anzugsmoment erhöht werden, ohne dass sich die auf den Wischerarm 2 wirkende axiale Kraft dadurch verändert. Dadurch wird erreicht, dass die Krafteinleitung über die Befestigungsmutter 10 konstant gehalten wird, auch wenn das Anzugsmoment der Befestigungsmutter 10 von Montagevorgang zu Montagevorgang variiert und insbesondere ein maximales Anzugsmoment überschritten wird.

Eine weitere Gewährleistung einer reproduzierbaren Kraft zwischen Verbindungsstück 4 und Wischerarm 2 wird dadurch erreicht, dass ein Sicherungsring in Form einer Federscheibe 12 zwischen der Befestigungsmutter 10 und dem Wischerarm 2 zwischengeschaltet ist, welcher eventuelle Positionierungsschwankungen oder auch Schwankungen, die sich aufgrund von Toleranzen bei der Herstellung ergeben, ausgleichen kann.

Zur Steigerung des Reibwertes ist zwischen Verbindungsstück 4 und Wischerarm 2 ein reibwertsteigerndes Mittel vorgesehen. Zur Steigerung des Reibwertes und damit des Reibmoments und somit des maximal zu übertragenden Momentes wurde zwischen Verbindungsstück 4 und Wischerarm 2 ein Reiblack eingebracht. Natürlich ist es auch denkbar, zwischen Verbindungsstück 4 und Wischerarm 2 eine Reibhülse 13 einzusetzen. Dabei können die durch die Reibhülse 13 erzielten Reibwerte abhängig vom gewählten Hülsenmaterial unterschiedlich sein, so dass es möglich ist, durch Wahl des Werkstoffes oder der Werkstoffzusammensetzung das durch den Befestigungsmechanismus 1 maximal zu übertragende Moment einzustellen. Selbstverständlich muss der Wischerantrieb stabiler ausgelegt sein als das maximal definierte Übertragungsmoment der Reibverbindung zwischen Wischerarm 2 und Verbindungsstück 4. Sollte das maximal zu übertragende Moment überschritten worden sein und dadurch ein Durchrutschen der entsprechenden Reibverbindung hervorgerufen worden sein, indem die Verbindung durch die Einwirkung des äußeren Moments gelöst wurde, kann die Verbindung einfach wieder hergestellt werden, indem die Befestigungsmutter 11 wieder festgezogen wird, nachdem der Wischerarm 2 wieder in seine richtige Position gebracht wurde. Das System ist anschließend wieder voll funktionsfähig. Dadurch ist gewährleistet, dass selbst bei der Einwirkung eines zu großen äußeren Momentes auf den Wischerarm 2 die verschiedenen Teile des Wischerantriebes nicht beschädigt werden können.

Die Montage des Wischerarms 2 an den Befestigungsmechanismus 1 läuft wie folgt ab. Zunächst wird der Endabschnitt 3a der Abtriebswelle 3 in das Verbindungsstück 4 eingesteckt. Der Endabschnitt 3a der Abtriebswelle 3 und die Aussparung 5 in dem Verbindungsstück 4 sind dabei so ausgelegt, dass sich eine formschlüssige Verbindung zwischen Verbindungsstück 4 und Endabschnitt 3a der Abtriebswelle 3 einstellt. Dann wird der Wischerarm 2 auf das Verbindungsstück 4 aufgeschoben und über die Kegelflächen 4a des Verbindungsstücks nach unten bewegt. Um eine reibschlüssige Verbindung zwischen dem Wischerarm 2 und den Kegelflächen 4a des Verbindungsstücks 4 zu erreichen, wird die Befestigungsmutter 11 auf den Vorsprung 7 des Verbindungsstücks 4 aufgeschraubt und nach unten bewegt. Die dadurch entstehende axiale Kraftkomponente wird auf der Keilfläche zwischen Wischerarm 2 und Verbindungsstück 4 in eine Querkomponente umgesetzt. Durch diese entsteht eine Normalkraft zwischen dem Verbindungsstück 4 und dem Endabschnitt 3a der Abtriebswelle 3. Die Befestigungsmutter 11 wird dazu in diesem Ausführungsbeispiel solange auf dem Vorsprung 7 des Verbindungsstücks 4 bewegt, bis es gegen einen Anschlag 14 stößt, welcher den axialen Weg des Wischerarms 2 auf den Kegelflächen 4a des Verbindungsstücks 4 begrenzt. Ist der Anschlag 14 erreicht, so kann das Anzugsmoment von außen weiter erhöht werden, ohne dass sich die von der Federscheibe 12 auf das Verbindungsstück 4 aufgebrachte Kraft verändert.

Die Normalkraft F_{N} zwischen Wischerarm 2 und Verbindungsstück 4 kann auch durch Variation der Kegelsteigung und für den Fall das der Anschlag 14 noch nicht erreicht ist oder nicht vorhanden ist durch das auf die Befestigungsmutter 11 aufgebrachten Anzugsmoment verändert werden, so dass es möglich ist, durch einfaches Austauschen des Verbindungsstückes 4 bzw. Einsetzen von Verbindungsstücken 4 mit verschiedenen Kegelsteigungen unterschiedliche maximal zu übertragende Reibmomente einzustellen.

Zur weiteren Erläuterung der Erfindung soll folgendes Berechnungsbeispiel dienen. Das Übertragungsmoment für eine Verbindung wie in Figur 1 gezeigt lässt sich folgendermaßen ermitteln. Sowohl die Abtriebswelle 3 als auch das Verbindungsstück 4 und der Wischerarm 2 sind aus Stahl gefertigt. Somit ergeben sich an den Reibstellen Abtriebswelle 3 und Verbindungsstück 4 bzw. Verbindungsstück 4 und Wischerarm 2 eine Kombination Stahl/Stahl, welche gefettet ist und mit hoher Oberflächengüte gepaart. Daraus entsteht ein Reibkoeffizient µ von 0,1 bis 0,15. Nun wird beispielhaft eine Normalkraft F_{N} zwischen 66 kN und 105 kN aufgebracht, wobei ein Abtriebswellenradius r = 6 mm angesetzt wird. Daraus ergibt sich ein Übertragungsmomentenbereich zwischen 39 Nm und 63 Nm. Dieser Momentenbereich ist aber zu gering, um ein optimales Wischfeld bereitzustellen. Dafür sind Momente > 100 Nm notwendig. Dies kann erreicht werden, indem die einzige variable Größe in der oben stehenden Gleichung entsprechend verändert wird und dazu wie in Figur 2 gezeigt reibwertsteigernde Mittel in den jeweiligen Verbindungsbereichen eingesetzt. Zur Erzielung eines ausreichend großen Momentenbereichs ist es erstrebenswert, einen Reibkoeffizient in den besagten Verbindungen auf einen Wert von µ = 0,15 bis 0,3 einzustellen.

Die Figur 2 zeigt ein alternatives Ausführungsbeispiel eines Befestigungsmechanismus 1, in dem die Befestigung des Verbindungsstücks 4 über ein Befestigungsmittel hier in der Form einer Befestigungsschraube 14 erfolgt. Zur Montage des Verbindungsstücks auf den Endabschnitt 3a der Abtriebswelle weist das Verbindungsstück 4 eine Aussparung 5 auf, in die der Endabschnitt 3a der Abtriebswelle 3 eingesetzt ist. In dem Verbindungsstück 4 ist eine entsprechend dem Durchmesser der Befestigungsschraube 14 ausgebildete Öffnung 15 vorgesehen, durch die die Befestigungsschraube 14 gesteckt wird, um anschließend in eine mit einem Gewinde 16 versehene in dem Endabschnitt 3a der Abtriebswelle 3 ausgebildete Bohrung 17 eingeschraubt zu werden. Zwischen Befestigungsschraube 14 und Verbindungsstück 4 ist in diesem Ausführungsbeispiel eine Druckscheibe 18 vorgesehen, über welche durch Festziehen der Befestigungsschraube 14 sich eine reibschlüssige Verbindung zwischen Wischerarm 2 und Verbindungsstück 4 einstellt, beispielsweise indem das Anzugsmoment der Befestigungsschraube 14 definiert angewendet wird.

Das Vorsehen der Befestigungsschraube 14 zur Befestigung des Verbindungsstücks 4 innerhalb der Bohrung 16 mit einem Gewinde 15 im Bereich unterhalb der Klemmung zwischen Verbindungsstück 4 und Endabschnitt 3a der Abtriebswelle 3 bringt den Vorteil mit sich, dass der lange Schaft der Befestigungsschraube 14 eine Dehnung im Hook'schen Bereich erlaubt. Dadurch kann die Gefahr eines Lösens der Befestigungsschraube 14 auch bei wechselnden Belastungen vermindert werden. Durch Verlagerung des Befestigungspunktes in den Endabschnitt 3a der Abtriebswelle 3 entfällt ferner der in der Figur 1 gezeigte durch die Befestigungsmutter 11 hervorgerufene hohe Aufbau. Schließlich fällt der Wischerarm 2 selbst bei Lösung der Verbindung zwischen Verbindungsstück 4 und Wischerarm 2 oder Abtriebswelle 3 und Verbindungsstück 4 nicht von der Welle, solange die Befestigungsschraube 14 nicht vollständig aus dem Gewinde 16 herausgedreht wird.

Zwischen dem Endabschnitt 3a der Abtriebswelle 3 und dem Verbindungsstück 4 wird in diesem Ausführungsbeispiel der Formschluss durch Ausbilden einer Sechskantform erreicht. Alternativ können auch nicht dargestellte Sperrelemente eingesetzt werden. Das Vorsehen eines den Formschluss bildenden Kopplungselementes in dem Berührungsbereich zwischen Verbindungsstück 4 und Endabschnitt 3a der Abtriebswelle hat den Vorteil, dass aufgrund des größeren Radius des Verbindungsstücks 4 im Berührungsbereich mit dem Wischerarm 2 für den Reibschluss kleinere Normalkräfte erforderlich sind, um das gleiche Moment zu übertragen. Besonders beim Einsatz von Stahlblechbefertigungsteilen kann zudem auch der günstigere Reibkoeffizient ausgenutzt werden. Natürlich ist es auch hier möglich, den Reibkoeffizienten durch geeignete Behandlung der Kontaktflächen zwischen Verbindungsstück 4 und Wischerarm 2 auf einen geeigneten Wert einzustellen.

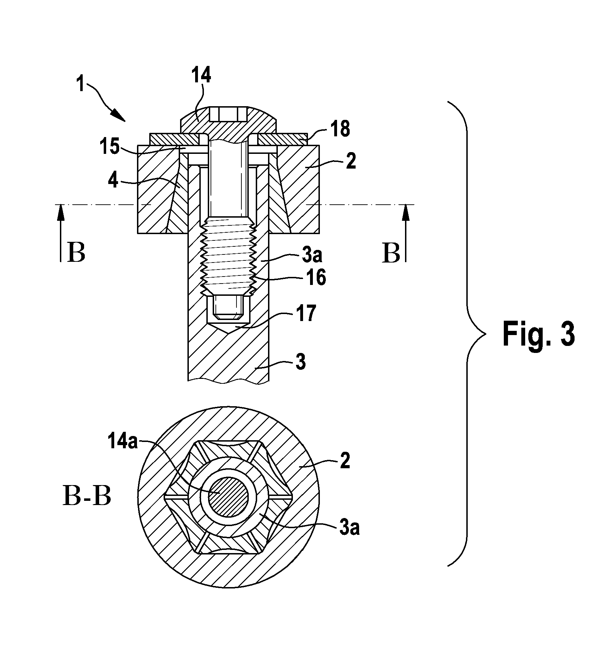

Schließlich zeigt Figur 3 einen Befestigungsmechanismus 1 gemäß der Figur 2, bei dem ein Durchrutschen zwischen Wischerarm 2 und Verbindungsstück 4 durch ein einen Formschluss bildendes Kopplungselement gebildet ist, indem die Außenfläche des Verbindungsstückes 4 zumindest im Berührungsbereich mit dem Wischerarm 2 sechseckig ausgeführt ist. Der Befestigungsbereich des Wischerarms 2 weist ebenfalls eine solche sechseckige Form auf. In dem gezeigten Ausführungsbeispiel wurde ein sogenanntes Rosettenmuster 19 gewählt, um den Flächenkontakt zwischen Wischerarm 2 und Verbindungsstück 4 zu reduzieren. Prinzipiell ist auch hier eine beliebige von der kreisrunden Form abweichende Formgebung möglich, die zu einem Formschluss führt. Ebenso kann anstelle eines Sechskants eine achtkantige oder n-kantige Formgebung gewählt werden. Natürlich ist es auch möglich, hier durch eine einfache Abflachung und entsprechende Ausbildung des Befestigungsbereichs des Wischerarms 2 den Formschluss einzustellen. Auch elliptische oder aus kreisförmigen Elementen zusammengesetzte Formen sind denkbar.

In einem nicht dargestellten Ausführungsbeispiel ist der Formschluss durch mindestens ein Sperrelement wie beispielsweise ein Zylinderstift, ein Kegelstift, eine Madenschraube oder ein Keil herbeigeführt, das entsprechend durch eine in dem Verbindungsstück 4 ausgebildete Aussparung eingesetzt ist.

## Patentansprüche

1. Scheibenwischervorrichtung insbesondere für einen Heckscheibenwischer eines Kraftfahrzeuges mit
einem Wischermotor mit einer oder mehreren Abtriebswellen (3),
einem oder mehreren Wischerarm (2), die jeweils über einen Befestigungsmechanismus (1) an einem Endabschnitt (3a) der Abtriebswelle (3) befestigbar sind, wobei
der Befestigungsmechanismus (1) ein Verbindungsstück (4) aufweist, in welchem eine komplementär zu dem Endabschnitt (3a) der Abtriebswelle (3) ausgebildete Bohrung (5) vorgesehen ist, in welche die Abtriebswelle (3) zur Befestigung des Verbindungsstücks (4) an dem Wischermotor einsteckbar ist, wobei zwischen Verbindungsstück (4) und Abtriebswelle (3) oder zwischen Verbindungsstück (4) und Endabschnitt (3a) der Abtriebswelle (3) und zwischen Verbindungsstück (4) und Wischerarm (2) im montierten Zustand eine reibschlüssige Verbindung gebildet ist, **dadurch gekennzeichnet, dass** zwischen Verbindungsstück (4)
und Abtriebswelle (3) oder zwischen Verbindungsstück (4) und Wischerarm (2) und zwischen Verbindungsstück (4) und Abtriebswelle (3) zur Einstellung eines zu übertragenden Moments ein reibwertsteigerndes Mittel (13) vorgesehen ist.

2. Scheibenwischervorrichtung nach Anspruch 1, **dadurch gekennzeichnet, dass** die reibschlüssige Verbindung zwischen Wischerarm (2) und Verbindungsstück (4) durch zwei komplementär ausgebildete Keilflächen (2a, 4a) gebildet ist, welche im montierten Zustand eine reibschlüssige Verbindung bilden.

3. Scheibenwischervorrichtung nach Anspruch 1 oder **2, dadurch gekennzeichnet, dass** an dem Verbindungsstück (4) eine insbesondere verstellbare Anlauffläche vorgesehen ist, über welche der Weg des Wischerarms (2) auf dem Verbindungsstück (4) begrenzbar ist.

4. Scheibenwischervorrichtung nach Anspruch 1, **dadurch gekennzeichnet, dass** das reibwertsteigernde Mittel (13) zumindest teilweise auf die Abtriebswelle (3) und/oder an der Bohrung (5) des Verbindungsstückes (4) aufgebracht ist.

5. Scheibenwischervorrichtung nach Anspruch 1 bis 4, **dadurch gekennzeichnet, dass** das reibwertsteigernde Mittel durch Veränderung der Oberfläche der Abtriebswelle.

6. Scheibenwischervorrichtung nach einem der Ansprüche 1 bis 5, **dadurch gekennzeichnet, dass** das reibwertsteigernde Mittel (13) durch eine zwischen Verbindungsstück (4) und Abtriebswelle (3) oder zwischen Verbindungsstück (4) und Wischerarm (2) und zwischen Verbindungsstück (4) und Abtriebswelle (3) eingesetzte Reibhülse (13) gebildet ist.

7. Scheibenwischervorrichtung nach einem der vorhergehenden Ansprüche, **dadurch gekennzeichnet, dass** zur Verhinderung eines Durchrutschens des Wischerarms (2) auf dem Verbindungsstück (4) mindestens ein einen Formschluss bildendes Kopplungselement an dem Verbindungsstück (4) und dem Wischerarm (2) vorgesehen ist.

8. Scheibenwischervorrichtung nach Anspruch 7, **dadurch gekennzeichnet, dass** das formschlussbildende Kopplungselement durch eine von der kreisrunden Form abweichende Formgebung des Wischerarms (2) und des Verbindungsstücks (4) oder durch Sperrelemente, insbesondere Zylinderstifte, Kegelstifte oder Keile, gebildet ist.

9. Scheibenwischervorrichtung nach einem der vorhergehenden Ansprüche, **dadurch gekennzeichnet, dass** in der Abtriebswelle (3) eine Bohrung (17) ausgebildet ist, in welches ein Befestigungsmittel (14) zur Befestigung des Verbindungsstücks (4) an der Abtriebswelle (3) einsetzbar ist.

10. Scheibenwischervorrichtung nach Anspruch 9, **dadurch gekennzeichnet, dass** eine Druckscheibe (18) an dem Verbindungsstück (4) vorgesehen ist, über welches durch Einsetzen des Befestigungsmittels (14) eine reibschlüssige Verbindung zwischen Wischerarm (2) und Verbindungsstück (4) einstellbar ist.

11. Scheibenwischvorrichtung nach einem der vorhergehenden Ansprüche, **dadurch gekennzeichnet, dass** an der der Abtriebswelle (3) gegenüberliegenden Seite das Verbindungsstück (4) einen Vorsprung (8) aufweist, auf den ein Außengewinde (9) ausgebildet ist, auf das eine Befestigungsmutter (10) aufschraubbar ist, über welche der Wischerarm (2) in axialer Richtung durch Aufbringen eines Anzugsmomentes entlang des Verbindungsstückes (4) bewegt und in die gewünschte Position bringbar und in dieser Position fixierbar ist.

## Claims

1. Window wiper device, in particular for a rear window wiper of a motor vehicle, comprising
a wiper motor with one or more output shafts (3),
one or more wiper arms (2) which are fastenable in each case via a fastening mechanism (1) to an end section (3a) of the output shaft (3), wherein
the fastening mechanism (1) has a connecting piece (4) in which is provided a bore (5) which is formed in a complementary manner to the end section (3a) of the output shaft (3) and into which the output shaft (3) can be inserted for fastening the connecting piece (4) to the wiper motor, wherein a frictional connection is formed between connecting piece (4) and output shaft (3) or between connecting piece (4) and end section (3a) of the output shaft (3) and between connecting piece (4) and wiper arm (2) in the fitted state, **characterized in that** a friction-coefficient-increasing means (13) is provided between connecting piece (4) and output shaft (3) or between connecting piece (4) and wiper arm (2) and between connecting piece (4) and output shaft (3) in order to adjust a torque which is to be transmitted.

2. Window wiper device according to Claim 1, **characterized in that** the frictional connection between wiper arm (2) and connecting piece (4) is formed by two wedge surfaces (2a, 4a) which are of complementary design and, in the fitted state, form a frictional connection.

3. Window wiper device according to Claim 1 or 2, **characterized in that** the connecting piece (4) is provided with an in particular adjustable stop surface via which the travel of the wiper arm (2) on the connecting piece (4) can be limited.

4. Window wiper device according to Claim 1, **characterized in that** the friction-coefficient-increasing means (13) is at least partially applied to the output shaft (3) and/or to the bore (5) in the connecting piece (4).

5. Window wiper device according to Claims 1 to 4, **characterized in that** the friction-coefficient-increasing means is formed by varying the surface of the output shaft.

6. Window wiper device according to one of Claims 1 to 5, **characterized in that** the friction-coefficient-increasing means (13) is formed by a friction sleeve (13) inserted between connecting piece (4) and output shaft (3) or between connecting piece (4) and wiper arm (2) and between connecting piece (4) and output shaft (3).

7. Window wiper device according to one of the preceding claims, **characterized in that**, in order to prevent the wiper arm (2) from slipping on the connecting piece (4), at least one coupling element forming a form-fitting connection is provided on the connecting piece (4) and on the wiper arm (2).

8. Window wiper device according to Claim 7, **characterized in that** the coupling element forming the form-fitting connection is formed by a shaping of the wiper arm (2) and of the connecting piece (4) so as to differ from the circular shape, or by means of blocking elements, in particular cylinder pins, tapered pins or wedges.

9. Window wiper device according to one of the preceding claims, **characterized in that** a bore (17) into which a fastening means (14) can be inserted for fastening the connecting piece (4) to the output shaft (3) is formed in the output shaft (3).

10. Window wiper device according to Claim 9, **characterized in that** a pressure disc (18) is provided on the connecting piece (4) via which a frictional connection between wiper arm (2) and connecting piece (4) can be adjusted by insertion of the fastening means (14).

11. Window wiper device according to one of the preceding claims, **characterized in that**, on the side opposite the output shaft (3), the connecting piece (4) has a projection (8) on which an external thread (9) is formed, onto which a fastening nut (10) can be screwed, via which the wiper arm (2) is moved in the axial direction by application of a tightening torque along the connecting piece (4) and can be brought into the desired position and can be fixed in said position.

## Revendications

1. Dispositif d'essuie-glace, en particulier pour un essuie-glace de vitre arrière d'un véhicule automobile, comprenant
un moteur d'essuie-glace avec un ou plusieurs arbres de sortie (3),
un ou plusieurs bras d'essuie-glace (2) qui peuvent être fixés à chaque fois par le biais d'un mécanisme de fixation (1) à une portion d'extrémité (3a) de l'arbre de sortie (3),
le mécanisme de fixation (1) présentant une pièce de connexion (4) dans laquelle est prévu un alésage (5) réalisé de manière complémentaire à la portion d'extrémité (3a) de l'arbre de sortie (3), dans lequel alésage l'arbre de sortie (3) peut être enfiché afin de fixer la pièce de connexion (4) au moteur d'essuie-glace, entre la pièce de connexion (4) et l'arbre de sortie (3) ou entre la pièce de connexion (4) et la portion d'extrémité (3a) de l'arbre de sortie (3) et entre la pièce de connexion (4) et le bras d'essuie-glace (2), dans l'état monté, étant formée une connexion par engagement par friction, **caractérisé en ce qu'**entre la pièce de connexion (4) et l'arbre de sortie (3) ou entre la pièce de connexion (4) et le bras d'essuie-glace (2) et entre la pièce de connexion (4) et l'arbre de sortie (3) est prévu un moyen augmentant le coefficient de friction (13) afin d'ajuster un couple à transmettre.

2. Dispositif d'essuie-glace selon la revendication 1, **caractérisé en ce que** la connexion par engagement par friction entre le bras d'essuie-glace (2) et la pièce de connexion (4) est formée par deux surfaces de clavette réalisées de manière complémentaire (2a, 4a), qui forment dans l'état monté une connexion par engagement par friction.

3. Dispositif d'essuie-glace selon la revendication 1 ou 2, **caractérisé en ce qu'**il est prévu au niveau de la pièce de connexion (4) une surface de butée notamment réglable, par le biais de laquelle la course du bras d'essuie-glace (2) sur la pièce de connexion (4) peut être limitée.

4. Dispositif d'essuie-glace selon la revendication 1, **caractérisé en ce que** le moyen augmentant le coefficient de friction (13) est appliqué au moins en partie sur l'arbre de sortie (3) et/ou sur l'alésage (5) de la pièce de connexion (4).

5. Dispositif d'essuie-glace selon les revendications 1 à 4, **caractérisé en ce que** le moyen augmentant le coefficient de friction est formé par variation de la surface de l'arbre de sortie.

6. Dispositif d'essuie-glace selon l'une quelconque des revendications 1 à 5, **caractérisé en ce que** le moyen augmentant le coefficient de friction (13) est formé par une douille de friction (13) insérée entre la pièce de connexion (4) et l'arbre de sortie (3) ou entre la pièce de connexion (4) et le bras d'essuie-glace (2) et entre la pièce de connexion (4) et le bras de sortie (3).

7. Dispositif d'essuie-glace selon l'une quelconque des revendications précédentes, **caractérisé en ce que** pour empêcher un glissement du bras d'essuie-glace (2) sur la pièce de connexion (4), au moins un élément d'accouplement formant un engagement par correspondance de formes est prévu sur la pièce de connexion (4) et le bras d'essuie-glace (2).

8. Dispositif d'essuie-glace selon la revendication 7, **caractérisé en ce que** l'élément d'accouplement formant un engagement par correspondance de formes est formé par une mise en forme du bras d'essuie-glace (2) et de la pièce de connexion (4) s'écartant de la forme ronde circulaire ou par des éléments de blocage, en particulier des goupilles cylindriques, des goupilles coniques ou des clavettes.

9. Dispositif d'essuie-glace selon l'une quelconque des revendications précédentes, **caractérisé en ce que** dans l'arbre de sortie (3) est réalisé un alésage (17), dans lequel peut être inséré un moyen de fixation (14) pour la fixation de la pièce de connexion (4) à l'arbre de sortie (3).

10. Dispositif d'essuie-glace selon la revendication 9, **caractérisé en ce qu'**un disque de pression (18) est prévu au niveau de la pièce de connexion (4), par le biais duquel, par insertion du moyen de fixation (14), une connexion par engagement par friction peut être ajustée entre le bras d'essuie-glace (2) et la pièce de connexion (4).

11. Dispositif d'essuie-glace selon l'une quelconque des revendications précédentes, **caractérisé en ce qu'**au niveau du côté opposé à l'arbre de sortie (3), la pièce de connexion (4) présente une saillie (8) sur laquelle est réalisé un filetage extérieur (9) sur lequel peut être vissé un écrou de fixation (10) par le biais duquel le bras d'essuie-glace (2) est déplacé dans la direction axiale par application d'un couple de traction le long de la pièce de connexion (4), peut être amené dans la position souhaitée et peut être fixé dans cette position.
